# EUROPEAN PATENT SPECIFICATION

(11) **EP 0 592 023 B1**
(45) Date of publication and mention of the grant of the patent: **06.12.1995**
(21) Application number: 93202307.0
(22) Date of filing: 04.08.1993
(51) Int. Cl.: B42F 5/00, B42D 1/08

(54) **CD album**
CD-Album
Album pour CD

(30) Priority: 06.08.1992 NL 9201416; 13.08.1992 NL 9201451
(43) Date of publication of application: 13.04.1994
(73) Proprietor: BEURSKENS HANDELSONDERNEMING, NL-5932 CW Tegelen (NL)
(72) Inventor: Beurskens, Peter Wilhelmus Maria, NL-5932 CW TEGELEN (NL)
(74) Representative: Smulders, Theodorus A.H.J., Ir.

(56) References cited:
- EP-A- 0 022 652
- EP-A- 0 177 435
- EP-A- 0 371 591
- EP-A- 0 420 350
- EP-A- 0 479 556
- WO-A-89/10882
- CH-A- 676 699
- DE-A- 3 512 823
- US-A- 4 199 061

## Description

The invention relates to a device according to the preamble of claim 1. Such a device is known from EP-0,420,350 A1.

In this known device CDs are presented in small boxes, which may or may not be transparent, accommodating one or more CDs, together with a title page and, optionally, a libretto or similar enclosures. It is known to store CDs, packed in these boxes, in racks, drawers, stands and similar storage systems, designed for that purpose. Thus, the CDs are indeed protected against dust, scratches and other sources of damage, each CD being fixed in the centre of the box in such a manner that the information-carrying side of the CD is freely suspended in the box space, so that damage through sliding is prevented. The "label side" must also be freely suspended, because scratches in the silver layer provided thereon let through laser beams, so that the CD player receives wrong information.

Such storage devices have the drawback that they take up very much space, that they can generally contain relatively few CDs compared to the volume of a storage device or the like and cannot be readily carried around. Further, known storage systems in which CD boxes are inserted so as to be side by side or one above the other, so that only the backs of the stored boxes are visible from the outside, do not permit of ready inspection, which makes it difficult to find a particular CD in the system. Moreover, such storage systems, in relation to the number of CDs stored, are expensive to purchase.

EP 0,479,556 A1 discloses an album for storing CDs. This known album comprises a plurality of sheets, all designed to receive one CD. Each sheet is constituted as an envelope in which a CD can be inserted by sliding it in from the top side. Each envelope has a central protrusion for engaging the central hole of the CD, in order to fixate the CD in the envelope. Since a CD has to be slided in place, thereby passing the protrusion, the CD will be scratched each time it is placed in the album or taken out. Furthermore the envelopes do not have any means for ensuring a distance between the CD and the envelope. Therefore the recorded parts of the CD in a stored position are in danger of being damaged. A further disadvantage of this known album is that only one CD per page can be stored.

EP 0,022,652 discloses an album like container for storing disc records. This known container comprises a number of sheets. In between two adjacent sheets a record can be stored. Each sheet comprises a recess that, in cooperation with an adjacent recess, can contain a record. The sheets are robustly and therefore voluminous and this known container can only comprise a preset, limited number of sheets and therefore the container cannot be adjusted to another number of records to be stored. The number of records that can be stored in this container is always one less than the number of sheets. This known container is therefore voluminous compared to the number of records to be stored and can furthermore not easily be leafed through like a book-like album.

The object of the invention is to provide a CD storage device in which the drawbacks of the known storage devices are avoided, and yet the CDs are scored with at least as much safety.

To this end, according to the invention, the storage device is characterized by the features according to claim 1.

Production-technically, it is simple to provide an embodiment in which the centring means comprise a stub, projecting upwards from the centre of the bottom of the recess and capable of forming a snap connection with the central opening of a CD.

In such an album, per sheet one or more unpacked CDs can be stored in the recesses so as to be freely suspended. When the album is closed, the CDs are stored dustfree and protected against impacts, scratches and the like. In the case of a sheet surface area of approx. 25 x 25 cm, four CD-accommodating recesses can be formed, which means that if the height of the profile is 4 mm per sheet, approx. 10 sheets, i.e. 40 CDs, can be stored in an album of normal photo album dimensions, which can be stored in a bookcase. Such an album occupies very little space when compared with a rack designed for an equivalent number of CDs, and further, in the album the CDs can be found quickly by leafing through.

In a variant embodiment of the device according to the invention, a plurality of recesses is provided on both sides of each sheet, while, preferably, two accommodating recesses are positioned opposite each other so as to be mirrored relative to the longitudinal centre plane of the sheet. In such an embodiment of the album, in the case where for instance four accommodating recesses are provided on each side of a sheet, as many as 40 CDs can be stored in an album of only five sheets.

In further elaboration of this variant embodiment, the centring and fixing means comprise a plurality of resilient projection segments, extending centrally from the bottom of the accommodating recess, which segments, together with the central opening of a CD, can form a snap connection, successive projection segments extending alternately to one and to the other side of the sheet. In this manner, centring and fixing means for detachably accommodating a CD in the centre of each accommodating recess are provided in a simple manner on both sides of the sheet in each accommodating recess.

For further facilitating ready inspection, in further elaboration of the invention, the album sheets may be provided with means for accommodating documents belonging to the CDs, so that the CDs can be identified more easily. In this connection, these accommodating means for the enclosures of the boxes in which the CDs were originally supplied, can be provided on the front side of the sheets or on the back side. According to the invention, in the case where the enclosure-accommodating means are arranged on the back side of the CD-accommodating recess, and the enclosures, in the open position of the album, belong to CDs on the opposite sheet or to adjacent CDs, the enclosure-accommodating means may be formed by profiles in the sheets.

In the embodiment with CD-accommodating recesses on both sides of the album sheets, the accommodating recesses for the enclosures can be provided on separate intermediate sheets.

Further embodiments of the invention and the effects achieved therewith will appear from the following description of the drawings.
Fig. 1 shows a top plan view of an opened album;
Fig. 2 shows a sectional side view of the album, taken on the line II - II in Fig. 1;
Fig. 3 shows a combined top plan view and side view, partly in section, of an album sheet in an alternative embodiment;
Fig. 4 shows a combined top plan view and side view, partly in section, of a further variant embodiment; and
Fig. 5 shows a perspective view of a partly opened CD storage album.

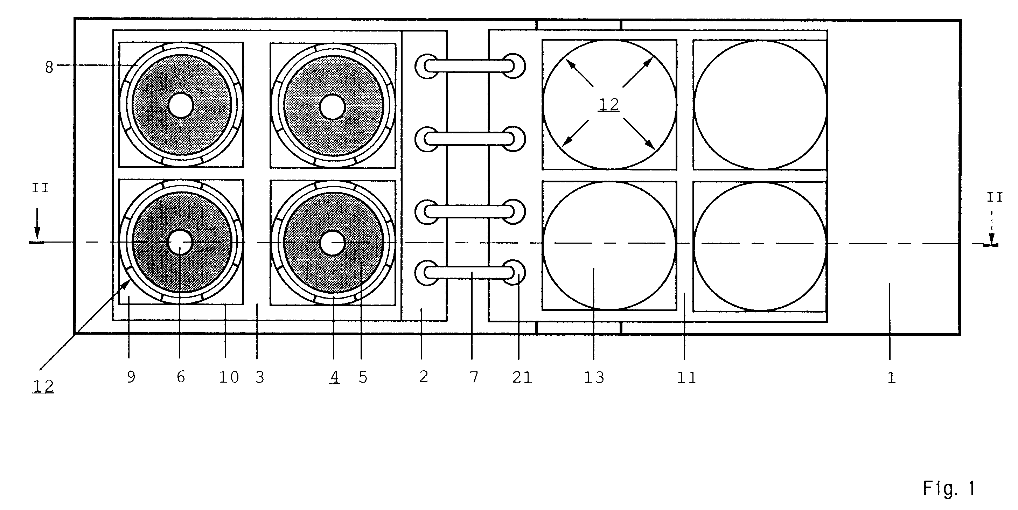

In the album 1 according to Fig. 1, each sheet 2 is provided on the front side 3 with four recesses 4 for accommodating one CD 5 each, which can be secured on a stop projection 6, in such a manner that both sides of the CD 5 are at least substantially freely suspended. The sheets 3 are attached detachably in the album by means of a binding ring 7 in such a manner that the album can be leafed through in a simple manner. The CD-accommodating recesses 4 are surrounded by a partly raised, circular edge 8. The four corners 9 of a square 10, enclosing the circular edge 8, are depressed to the back side 11 of the sheet 2, to form, at the sides 12, directed towards each other, of the corners 9 of the square 10, openings for accommodating documents 13 belonging to the CDs, which openings extend from the back side 11 thereof perpendicularly to the plane of the sheet 2.

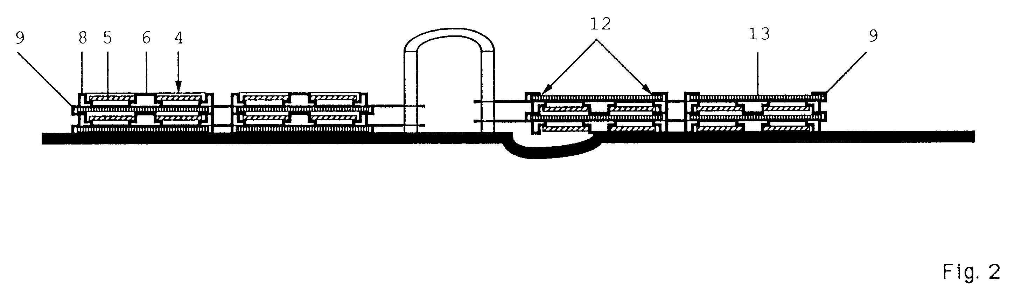

As is shown in Fig. 2, the sheets 2 in the album 1 bed down on each other and on the cover of the album 1 in such a manner that the CDs 5 are protected against, for instance, scratches and dust.

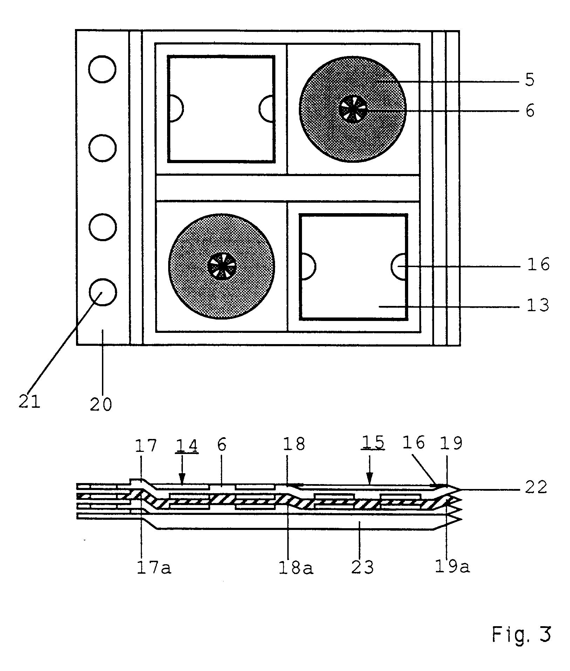

Fig. 3 shows a sheet 20, comprising on the front side as well as on the back side two CD-accommodating recesses 14, and two accommodating recesses 15 for the documents belonging to the CDs 5. The accommodating recesses are positioned on the sheets in such a manner that on opposite sides of each sheet there is always located a CD-accommodating recess 14 and a document-accommodating recess 15. The documents can be fitted in the document-accommodating recess 15 below projections 16, extending in the recess substantially parallel to the bottom and slightly spaced therefrom.

The album sheet according to Fig. 3 comprises on one side positioning projections or edges 17,18 and 19, which, for a proper positioning of the sheets relative to each other, cooperate with the positioning projections or edges 17a, 18a and 19a respectively, arranged on the opposite side of an adjacent sheet. The side 22 remote from the holes 21 for the binding ring 7 is formed in such a manner that the sheets can be grasped in a simple manner when they bed down on each other. The sides 23 of the sheet 20 are formed so as to be able to enclose the sides 23 of a superjacent sheet, in order to obtain a dustproof sealing of the CD-accommodating recesses 14.

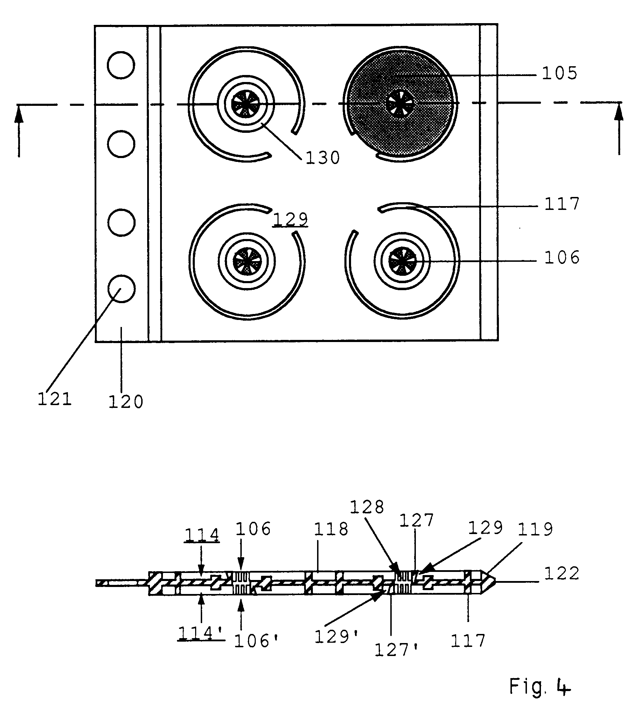

Fig. 4 shows a variant embodiment of the sheet 120, comprising four CD-accommodating recesses 114 on the front side as well as the back side. The accommodating recesses are positioned on the sheets in such a manner that on opposite sides of the sheet two CD-accommodating recesses 114 are located mirrored relative to the longitudinal centre plane of the sheet 120. The documents can be accommodated in separate intermediate sheets, not shown in the drawing, positioned separately between two CD-carrying sheets 120, which intermediate sheets comprise on both sides thereof four document-accommodating recesses in the form of insertion pockets. The insertion pockets are distributed over the sheet in a manner corresponding to that of the distribution of the CD-accommodating recesses.

Each centring projection 106, 106' is formed by six resilient projection segments 127, 127', extending from the bottom of the accommodating recess 114, 114', and arranged along the circumferential edge of an opening 128 and which, at least at the side remote from the opening 128, comprise a face 129, slightly overhanging (the slant of which is shown in an exaggerated manner), such that the joint inclined faces are capable of fixing a CD in the accommodating recess 114. Between every two adjoining projection segments 127 a space is left open, having at least the size of a projection segment 127'. The centring projection 106', arranged on the opposite side of the sheet so as to be mirrored relative to the centring projection 106, is rotated relative thereto about its (fictive) longitudinal centre axis over such an angle (over an angle of approximately 30° in the case of six projection segments 106, 106', in each accommodating recess 114), that the projection segments 127', forming this centring projection 106', fittingly connect, at the lower sides thereof, between the lower sides of two projection segments 127 of the centring projection 106.

Because the projection segments 127 of one centring projection 106 and the projection segments 127' of the opposite centring projection 106' together substantially form the circumferential edge of the opening 128, a reliable fixing means is obtained in each accommodating recess in a simple manner and with a minimum use of material, while, moreover, the sheet is prevented from warping owing to, for instance, shrinkage stresses, occurring upon cooling after injection molding. Moreover, in this manner, the projection segments 127, 127' have sufficient room for bending away when a CD is being removed or placed in position.

Arranged in each accommodating recess 114, 114' is a circular edge 130 which surrounds the centring projection 106, 106' at a distance and is clearly lower than the centring projection. A CD placed in the accommodating recess 114, 114' can have a, preferably unrecorded, central part resting on this edge 130, so that the recorded surface of the CD remains clear of the bottom of the accommodating recess 114, 114' and of adjacent sheets 120.

Each accommodating recess 114 comprises along the outer edge thereof an upright, substantially circular edge 117, interrupted in the vicinity of the centre of the sheet 120. Because the edge is interrupted, a take-out opening 129 to the accommodating recess 114 is formed, through which the CD, accommodated in the accommodating recess 114, can readily be grasped and removed, with the resilient projection segments 127 being bent toward each other. At the same time, this positioning of the take-out openings 129 ensures that the CDs can be stored in the album so as to be relatively dustfree.

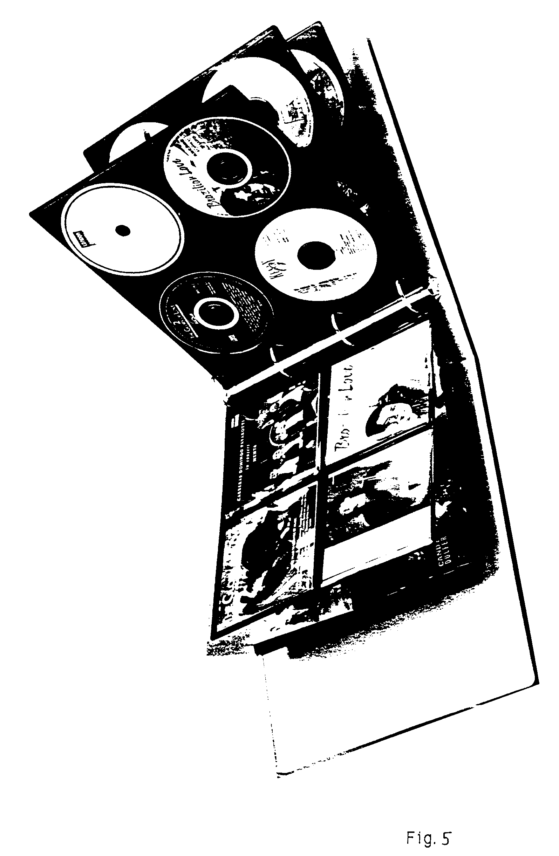

Fig. 5 clearly shows that the CDs and the documents belonging thereto can be stored in the album in a convenient manner.

It will be clear that the invention is not limited to the embodiment described, but various modifications are possible within the scope of the invention as defined in the appended claims. It is essential to the invention that the sheets of an album are provdided with a plurality of separate accommodating recesses for CDs or the like, the accommodating recesses comprising means for positioning the CDs in the accommodating recesses in such a manner that the recorded surface of the CDs is at least substantially freely suspended.

## Claims

1. A device for temporarily storing compact discs (5), comprising a plurality of sheets (2, 20, 120) made of a synthetic material, each of said sheets (2, 20, 120) having a recess (4, 14, 114) on a side of the sheet (2, 20, 120) being of a configuration such as to receive therewithin one compact disc (5) and being provided with a fixing and centering means (6, 106; 130) for receiving, centering and detachably fixing a compact disc (5) within each recess (4, 14, 114) such that the compact disc (5) is vertically disposed within the recess (4, 14, 114) so that a recorded part of the compact disc (5) is disposed at a distance from each sheet (2, 20, 120), the recess (4, 14, 114) being designed to receive and release a compact disc (5) in a direction generally normal to the plane of the sheet (2, 20, 120), characterized in that each sheet (2, 20, 120) is provided in profile with a plurality of vertically-disposed recesses (4, 14, 114) on at least one side, whereby binding means (7; 21, 121) are provided for detachably binding edges of the plurality of said sheets into a book-like album (1), said binding means (7; 21, 121) allowing each sheet (2, 20, 120) to be turned for viewing as a leaf of a book-like album (1).

2. A device according to claim 1, characterized in that a plurality of recesses (14, 114) is provided on both sides (3, 11) of each sheet (20, 120).

3. A device according to claim 2, characterized in that the recesses (114) provided on both sides (3, 11) of each sheet (120) are positioned opposite each other so as to be mirrored relative to a longitudinal center plane of the sheet (120).

4. A device according to any one of claims 1-3, characterized in that the centering means (6, 106; 130) comprise a stub (6, 106) projecting outward from the center of a bottom of the recess (4, 14, 114) and capable of forming a snap connection with the central opening of the compact disc (5).

5. A device according to any one of claims 1-3, characterized in that the fixing and centering means (106; 130) comprise a plurality of resilient projection segments (127, 127') extending centrally from a bottom of the recess (114), said segments (127, 127') being capable of forming a snap connection together with a central opening of a compact disc (5).

6. A device according to claim 3 and claim 5, characterized in that each projection segment extends (127) on one side (3) of the sheet (120) opposite the side (11) where the adjacent projection segments (127) extend.

7. A device according to any one of claims 1-6, characterized in that the sheets (2, 20) are provided with means (12, 15, 16) for accommodating documents (13) relating to the compact disc (5), so that the compact disc (5) can be identified more easily.

8. A device according to claim 7, characterized in that the means (12, 15, 16) for accommodating documents (13) are formed in the sheets (2, 20).

9. A device according to claim 7, characterized in that the means for accommodating documents are formed by insertion pockets made of transparent foil and fixed on the sheet.

10. A device according to any one of the preceding claims, characterized in that the sheets (2, 20, 120) have been formed by vacuum molding from synthetic sheet material.

11. A device according to any one of claims 1-9, characterized in that the sheets (2, 20, 120) have been formed of synthetic material, in particular polystyrene, by injection molding.

## Patentansprüche

1. Vorrichtung zum vorübergehenden Aufbewahren von Compact Discs (5), versehen mit mehreren Blättern (2, 20, 120) aus synthetischem Material, wobei jedes Blatt (2, 20, 120) an einer Seite einen Hohlraum (4, 14, 114) aufweist, der zum Aufnehmen einer Compact Disc (5) eingerichtet ist und mit einem Fixier- und Zentrierorgan (6, 106; 130) zum Aufnehmen, Zentrieren und lösbaren Befestigen einer Compact Disc (5) in einem Hohlraum (4, 14, 114) versehen ist, derart, daß die Compact Disc (5) in vertikaler Richtung in dem Hohlraum (4, 14, 114) so angebracht ist, daß ein beschriebener Teil der Compact Disc (5) sich im Abstand von jedem Blatt (2, 20, 120) befindet, wobei der Hohlraum (4, 14, 114) zum Aufnehmen und Freigeben einer Compact Disc (5) in einer Richtung im wesentlichen quer zur Ebene des Blattes (2, 20, 120) eingerichtet ist, dadurch gekennzeichnet, daß jedes Blatt (2, 20, 120) im Profil an mindestens einer Seite mit mehreren in vertikaler Richtung angeordneten Hohlräumen (4, 14, 114) versehen ist, wobei Bindemittel (7, 21, 121) zum lösbaren Binden von Rändern mehrerer Blätter in einem buchähnlichen Album (1) vorgesehen sind, durch welche Bindemittel (7, 21, 121) jedes Blatt (2, 20, 120) zur Betrachtung wie ein Blatt eines buchähnlichen Albums (1) umgeschlagen werden kann.

2. Vorrichtung nach Anspruch 1, dadurch gekennzeichnet, daß mehrere Hohlräume (14, 114) an beiden Seiten (3, 11) jedes Blattes (20, 120) vorgesehen sind.

3. Vorrichtung nach Anspruch 2, dadurch gekennzeichnet, daß die an beiden Seiten (3, 11) jedes Blattes (20, 120) vorgesehenen Hohlräume (114) einander gegenüberliegen, um sich relativ zu einer Längsmittelebene des Blattes (120) zu spiegeln.

4. Vorrichtung nach einem der Ansprüche 1 bis 3, dadurch gekennzeichnet, daß das Zentrierorgan (6, 106; 130) einen Stutzen (6, 106) aufweist, der aus der Mitte eines Bodens des Hohlraumes (4, 14, 114) herausragt und mit der zentralen Öffnung der Compact Disc (5) eine Schnappverbindung bilden kann.

5. Vorrichtung nach einem der Ansprüche 1 bis 3, dadurch gekennzeichnet, daß das Fixier- und Zentrierorgan (106; 130) mehrere elastische herausragende Segmente (127, 127') aufweist, die sich zentral von einem Boden des Hohlraumes (114) erstrecken, welche Segmente (127, 127') zusammen mit einer zentralen Öffnung einer Compact Disc (5) eine Schnappverbindung bilden können.

6. Vorrichtung nach Anspruch 3 und Anspruch 5, dadurch gekennzeichnet, daß jedes herausragende Segment (127) sich an einer Seite (3) des Blattes (120) erstreckt gegenüber der Seite (11), an der die benachbarten herausragenden Segmente (127) sich erstrecken.

7. Vorrichtung nach einem der Ansprüche 1 bis 6, dadurch gekennzeichnet, daß die Blätter (2, 20) mit Mitteln (12, 15, 16) zum Aufnehmen von die Compact Disc (5) betreffenden Dokumenten (13) versehen sind, so daß die Compact Disc (5) leichter identifiziert werden kann.

8. Vorrichtung nach Anspruch 7, dadurch gekennzeichnet, daß die Mittel (12, 15, 16) zum Aufnehmen von Dokumenten (13) in den Blättern (2, 20) gebildet sind.

9. Vorrichtung nach Anspruch 7, dadurch gekennzeichnet, daß die Mittel zum Aufnehmen von Dokumenten durch Einstecktaschen aus transparenter Folie gebildet und auf dem Blatt fixiert sind.

10. Vorrichtung nach einem der vorhergehenden Ansprüche, dadurch gekennzeichnet, daß die Blätter (2, 20, 120) durch Vakuumformen aus synthetischem Blattmaterial gebildet sind.

11. Vorrichtung nach einem der Ansprüche 1 bis 9, dadurch gekennzeichnet, daß die Blätter (2, 20, 120) durch Spritzgießen aus synthetischem Material, insbesondere Polystyrol, gebildet sind.

## Revendications

1. Un dispositif pour le stockage temporaire de disques compacts (5), comprenant une multitude de feuilles (2, 20, 120) en matière synthétique, dont chacune desdites feuilles (2, 20, 120) comporte une entaille (4, 14, 114) d'un côté de le feuille (2, 20, 120) configurée de façon à pouvoir y loger un disque compact (5) et muni d'un moyen de fixation et de centrage (6, 106, 130) pour recevoir, centrer et fixer de façon amovible un disque compact (5) dans chaque entaille (4, 14, 114) pour que le disque compact (5) soit disposé verticalement dans l'entaille (4, 14, 114) de façon à ce que la partie enregistrée du dique compact (5) se trouve à une certaine distance de chaque feuille (2, 20, 120), l'entaille (4, 14 114) étant conçue pour recevoir et libérer un disque compact (5) dans une direction généralement normale au plan de la feuille (2, 20, 120), caractérisé en ce que chaque feuille (2, 20, 120) est dotée de profil d'une multitude d'entailles disposées verticalement (4, 14, 114) d'un côté au moins, et que des systèmes de reliure (7, 21, 121) sont prévus pour relier de façon détachable les bords de la multitude desdites feuilles en forme d'album semblable à un livre (1), lesdits dispositifs de reliure (7, 21, 121) permettant à chaque feuille (2, 20, 120) d'être tournée comme les feuilles d'un album semblable à un livre (1).

2. Un dispositif selon la conclusion 1, caractérisé en ce que une multitude d'entailles (14, 114) est prévue des deux côtés (3, 11) de chaque feuille (20, 120).

3. Un dispositif selon la conclusion 2, caractérisé en ce que les entailles (114) prévues des deux côtés (3, 11) de chaque feuille (120) sont positionnées face à face afin d' être reflétées relativement au plan central longitudinal de la feuille (120).

4. Un dispositif selon les conclusions 1-3, caractérisé en ce que le moyen de centrage (6, 106, 130) comprend un embout (6, 106) saillant vers l'extérieur à partir du centre du fond de l'entaille (4, 14, 114) et capable d'y établir une connexion par encliquetage avec l'ouverture centrale du disque compact (5).

5. Un dispositif selon les conclusions 1-3, caractérisé en ce que les moyens de fixation et de centrage (106, 130) comprennent une multitude de segments de projection élastiques (127, 127') qui s'étendent de manière centrale du fond de l'entaille (114), lesdits segments (127, 127') étant capables d'établir une connexion par encliquetage entre eux avec une ouverture centrale pour le disque compact (5).

6. Un dispositif selon la conclusion 3 et la conclusion 5, caractérisé en ce que chaque segment de projection s'étend (127) d'un côté (3) de la feuille (120) du côté opposé (11) d'où s'étend le segment de projection adjacent (127).

7. Un dispositif selon les conclusions 1-6, caractérisé en ce que les feuilles (2, 20) sont dotées de moyens (12, 15, 16) permettant de contenir des documents (13) relatifs au disque compact (5), afin de permettre une identification plus facile du disque compact (5).

8. Un dispositif selon la conclusion 7, caractérisé en ce que les moyens (12, 15, 16) permettant de contenir les documents (13) sont formés dans les feuilles (2, 20).

9. Un dispositif selon la conclusion 7, caractérisé en ce que les moyens pour contenir les documents sont formés par des poches d'insertion faites de feuilles transparantes et fixées sur la feuille.

10. Un dispositif selon une des conclusions précédentes, caractérisé en ce que les feuilles (2, 20, 120) ont été formées par moulage sous vide de feuilles synthétiques.

11. Un dispositif selon les conclusions 1-9, caractérisé en ce que les feuilles (2, 20, 120) ont été formées en matière synthétique, notamment du polystyrène, par moulage par injection.
